(19) Europäisches Patentamt
European Patent Office
Office européen des brevets

(11) EP 4 521 432 A1

(12) EUROPEAN PATENT APPLICATION

(43) Date of publication:
12.03.2025 Bulletin 2025/11

(21) Application number: 24196449.3

(22) Date of filing: 26.08.2024

(51) International Patent Classification (IPC):
H01G 4/232 (2006.01)   H01G 4/30 (2006.01)
H01G 4/12 (2006.01)

(52) Cooperative Patent Classification (CPC):
H01G 4/30; H01G 4/2325; H01G 4/12; H01G 4/232

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:   07.09.2023   KR 20230118899

(71) Applicant: Samsung Electro-Mechanics Co., Ltd.
Gyeonggi-do (KR)

(72) Inventors:
• Yeon, Gyu Ho
  Suwon-si, Gyeonggi-do (KR)
• Lee, Chae Dong
  Suwon-si, Gyeonggi-do (KR)
• Kim, Seung Ah
  Suwon-si, Gyeonggi-do (KR)

(74) Representative: Grünecker Patent- und
Rechtsanwälte
PartG mbB
Leopoldstraße 4
80802 München (DE)

(54) MULTILAYER ELECTRONIC COMPONENT

(57)    A multilayer electronic component includes a body including a dielectric layer and internal electrodes alternately disposed with the dielectric layer; and an external electrode disposed on the body. The external electrode includes a first electrode layer in contact with the internal electrode and a second electrode layer disposed on the first electrode layer. The first electrode layer includes Cu, the second electrode layer includes Cu and SiC, and an area fraction of SiC in the second electrode layer is 5% or more and 20% or less. Moisture resistance reliability and adhesion strength of a multilayer electronic component may be improved.

FIG. 5

EP 4 521 432 A1

**Description**

**CROSS-REFERENCE TO RELATED APPLICATION(S)**

This application claims benefit of priority to Korean Patent Application No. 10-2023-0118899 filed on September 7, 2023 in the Korean Intellectual Property Office, the disclosure of which is incorporated herein by reference in its entirety.

**TECHNICAL FIELD**

The present disclosure relates to a multilayer electronic component.

Multilayer ceramic capacitors (MLCCs), multilayer electronic components, are chip-type condensers mounted on the printed circuit boards of various electronic products including display devices, such as liquid crystal displays (LCDs) and plasma display panels (PDPs), computers, smartphones, cell phones, circuits, such as on-board charger (OBC) DC-DC converters of electric vehicles, and the like, to charge or discharge electricity.

The glass included in a basic electrode layer of the existing external electrodes is mainly formed of network-forming materials, such as Si and Al, and alkali metal or alkaline earth metal may be added to lower the glass transition temperature Tg. However, in the case of forming a plating layer on the basic electrode layer, reliability deterioration may occur due to glass erosion, and if the glass transition temperature is excessively lowered, glass may not sufficiently penetrate into a body, resulting in deterioration of moisture resistance reliability.

Therefore, there is a need to improve a structure of external electrodes to prevent deterioration of reliability due to plating solution or external moisture penetration.

**SUMMARY**

An aspect of the present disclosure is to solve the problem that the reliability of multilayer electronic components deteriorates as glass of a Cu sintered electrode is eroded by a plating solution.

Another aspect of the present disclosure is to solve the problem that moisture resistance reliability of multilayer electronic components deteriorates as glass does not sufficiently penetrate into a body when a glass transition temperature of glass of a Cu sintered electrode is lowered.

However, the purpose of the present disclosure is not limited to the aforementioned contents and may be more easily understood in the process of describing specific exemplary embodiments in the present disclosure.

According to an aspect of the present disclosure, a multilayer electronic component includes: a body including a dielectric layer and internal electrodes alternately disposed with the dielectric layer; and an external electrode disposed on the body, wherein the external electrode includes a first electrode layer in contact with the internal electrodes and a second electrode layer disposed on the first electrode layer, the first electrode layer includes Cu, the second electrode layer includes Cu and SiC, and an area fraction of SiC in the second electrode layer is 5% or more and 20% or less.

According to another aspect of the present disclosure, a multilayer electronic component includes: a body including a dielectric layer and internal electrodes alternately disposed with the dielectric layer; and an external electrode disposed on the body, wherein the external electrode includes a first electrode layer in contact with the internal electrodes and a second electrode layer disposed on the first electrode layer, the first electrode layer includes Cu and a first glass, the second electrode layer includes Cu, SiC, and a second glass, and the first glass has a composition different from a composition of the second glass.

**BRIEF DESCRIPTION OF DRAWINGS**

The above and other aspects, features, and advantages of the present disclosure will be more clearly understood from the following detailed description, taken in conjunction with the accompanying drawings, in which:

FIG. 1 is a perspective view schematically illustrating a multilayer electronic component according to an exemplary embodiment;
FIG. 2 is a cross-sectional view taken along line I-I' in FIG. 1;
FIG. 3 is a cross-sectional view taken along line II-II' in FIG. 1;
FIG. 4 is an exploded perspective view of a body according to an exemplary embodiment;

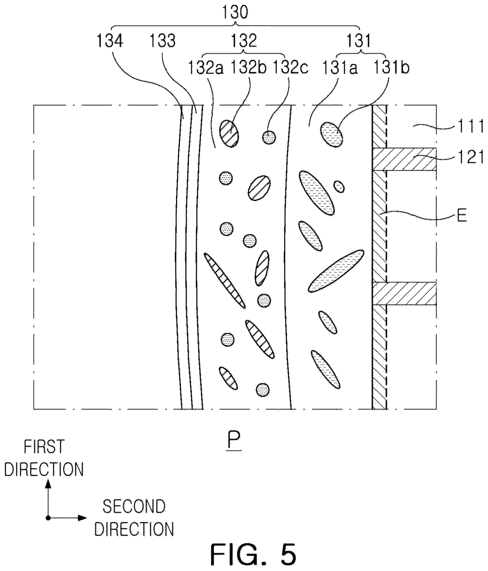

FIG. 5 is an enlarged view of region P in FIG. 2;

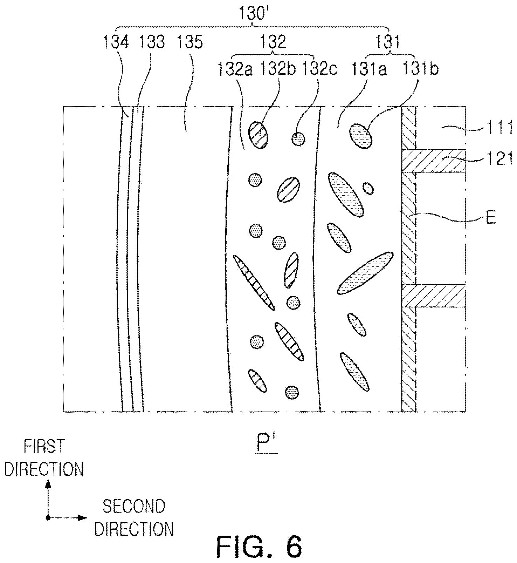

FIG. 6 is an enlarged view of region P' in FIG. 2;
FIG. 7 is an image of a cross-section of a second electrode layer captured with a scanning electron microscope (SEM) when an SiC area fraction exceeds 20%; and
FIG. 8 is an image of a cross-section of the second electrode layer captured with an SEM when the SiC area fraction satisfies 5% or more and 20% or less.

## DETAILED DESCRIPTION

Hereinafter, exemplary embodiments of the present inventive concept will be described in detail with reference to the accompanying drawings. The inventive concept may, however, be exemplified in many different forms and should not be construed as being limited to the specific exemplary embodiments set forth herein. Rather, these exemplary embodiments are provided so that this disclosure will be thorough and complete, and will fully convey the scope of the inventive concept to those skilled in the art. In the drawings, the shapes and dimensions of elements may be exaggerated for clarity, and the same reference numerals will be used throughout to designate the same or like elements.

To clarify the present disclosure, portions irrespective of description are omitted and like numbers refer to like elements throughout the specification, and in the drawings, the thickness of layers, films, panels, regions, etc., are exaggerated for clarity. Also, in the drawings, like reference numerals refer to like elements although they are illustrated in different drawings. Throughout the specification, unless explicitly described to the contrary, the word "comprise" and variations, such as "comprises" or "comprising," will be understood to imply the inclusion of stated elements but not the exclusion of any other elements.

In the drawing, a first direction is a direction in which first and second internal electrodes are alternately disposed with a dielectric layer interposed therebetween or a thickness (T) direction, and a second direction and a third direction are perpendicular to the first direction, in which the second direction may be defined as a length (L) direction and the third direction may be defined as a width (W) direction.

A multilayer electronic component 100 according to an exemplary embodiment in the present disclosure may include a body including a dielectric layer 111 and internal electrodes 121 and 122 alternately disposed with the dielectric layer; and external electrodes 130 and 140 disposed on the body, wherein the external electrode includes a first electrode layer 131 in contact with the internal electrode and a second electrode layer 132 disposed on the first electrode layer, the first electrode layer includes Cu 131a, and the second electrode layer includes Cu 132a and SiC 132c.

The body 110 includes the dielectric layer 111 and the internal electrodes 121 and 122 alternately disposed with the dielectric layer 111.

Although a specific shape of the body 110 is not particularly limited, as shown, the body 110 may have a hexahedral shape or a similar shape. Due to the shrinkage of ceramic powder included in the body 110 during a sintering process, the body 110 may not have a perfectly straight hexahedral shape but may have a substantially hexahedral shape.

The body 110 may include the first and second surfaces 1 and 2 opposing each other in the first direction, the third and fourth surfaces 3 and 4 connected to the first and second surfaces 1 and 2 and opposing each other in the second direction, and the fifth and sixth surfaces 5 and 6 connected to the first and second surfaces 1 and 2, connected to the third and fourth surfaces 3 and 4, and opposing each other in the third direction.

The plurality of dielectric layers 111 forming the body 110 are in a sintered state, and adjacent dielectric layers 111 may be integrated such that boundaries therebetween may not be readily apparent without using a scanning electron microscope (SEM).

According to an exemplary embodiment in the present disclosure, a material for forming the dielectric layer 111 is not limited as long as sufficient electrostatic capacitance may be obtained. For example, a barium titanate-based material, a lead composite perovskite-based material, or a strontium titanate-based material may be used. The barium titanate-based material may include a $BaTiO_3$-based ceramic powder, and the ceramic powder may include $BaTiO_3$ and $(Ba_{1-x}Ca_x)TiO_3$ ($0<x<1$), $Ba(Ti_{1-y}Ca_y)O_3$ ($0<y<1$), $(Ba_{1-x}Ca_x)(Ti_{1-y}Zr_y)O_3$ ($0<x<1$, $0<y<1$) or $Ba(Ti_{1-y}Zr_y)O_3$ ($0<y<1$) in which Ca, Zr, and the like are partially dissolved in $BaTiO_3$.

In addition, as a material for forming the dielectric layer 111, various ceramic additives, organic solvents, binders, dispersants, etc. may be added to the powder, such as barium titanate ($BaTiO_3$), according to purposes of the present disclosure.

An average thickness td of the dielectric layer 111 is not particularly limited.

For the purpose of miniaturization and high capacitance of the multilayer electronic component 100, the average thickness td of the dielectric layer 111 may be 0.35 $\mu$m or less, and to improve the reliability of the multilayer electronic component 100 under high temperature and high voltage, the average thickness of the dielectric layer 111 may be 2 um or more.

The average thickness td of the dielectric layer 111 may refer to the average thickness td of the dielectric layer 111 disposed between the first and second internal electrodes 121 and 122.

The average thickness td of the dielectric layer 111 may be measured by scanning an image of a cross-section of the body 110 in the length-thickness (L-T) direction with a scanning electron microscope (SEM) having a magnification of 10,000. More specifically, the average value may be measured by measuring the thickness of one dielectric layer at 30 equally spaced points in the longitudinal direction in the scanned image. The 30 points at equal intervals may be designated in the capacitance formation portion Ac. In addition, if the average value is measured by extending the measurement of the average value to 10 dielectric layers, the average thickness of the dielectric layers may be more generalized.

The body 110 may include the capacitance formation portion Ac formed inside the body 110 and forming capacitance with the first internal electrode 121 and the second internal electrode 122 alternately disposed with the dielectric layer 111 interposed therebetween and cover portions 112 and 113 formed above and below the capacitance formation portion Ac in the first direction.

In addition, the capacitance formation portion Ac is a portion that contributes to formation of capacitance of the capacitor and may be formed by repeatedly stacking a plurality of first and second internal electrodes 121 and 122 with the dielectric layer 111 interposed therebetween.

In an exemplary embodiment, an upper cover portion 112 may be disposed on one surface of the capacitance formation portion Ac in the first direction, and a lower cover portion 113 may be disposed on the other surface of the capacitance formation portion Ac in the first direction.

The upper cover portion 112 and the lower cover portion 113 may be formed by stacking a single dielectric layer or two or more dielectric layers on upper and lower surfaces of the capacitance formation portion Ac in the thickness direction, respectively, and may serve to prevent damage to the internal electrodes due to physical or chemical stress.

The upper cover portion 112 and the lower cover portion 113 may not include an internal electrode and may include the same material as that of the dielectric layer 111.

That is, the upper cover portion 112 and the lower cover portion 113 may include a ceramic material, for example, a barium titanate ($BaTiO_3$)-based ceramic material.

Meanwhile, an average thickness tc of the cover portions 112 and 113 may not be particularly limited. However, the average thickness tc of the cover portions 112 and 113 may be 15 um or less in order to more easily achieve miniaturization and high capacitance of the multilayer electronic component.

The average thickness tc of the cover portions 112 and 113 may refer to a size in the first direction and may be a value obtained by averaging sizes of the cover portions 112 and 113 measured at five equally spaced points above or below the capacitance formation portion Ac.

In an exemplary embodiment, margin portions 114 and 115 may be disposed on one surface and the other surface of the capacitance formation portion Ac in the third direction.

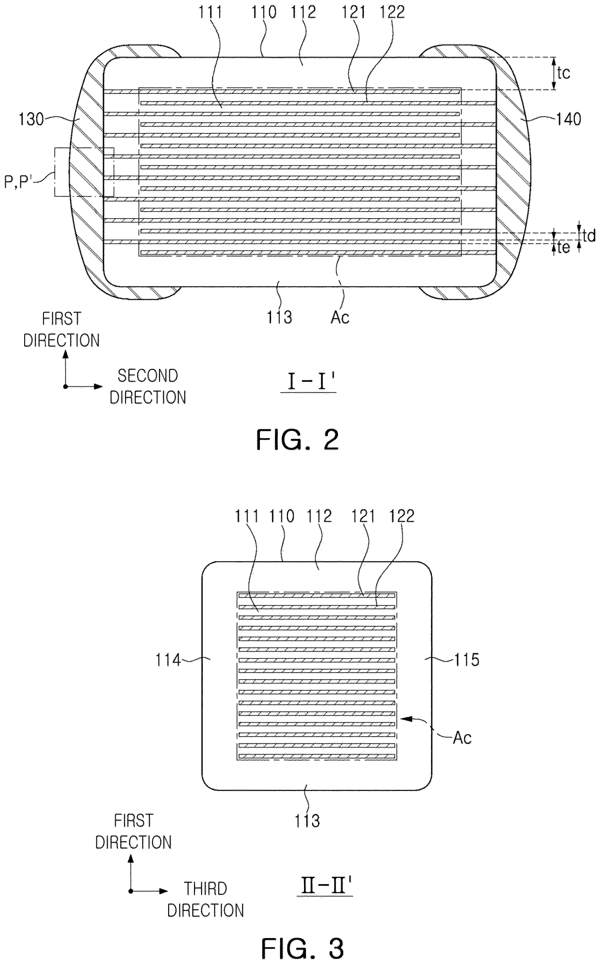

Referring to FIG. 2, the margin portions 114 and 115 may include a margin portion 114 disposed on the fifth surface 5 of the body 110 and a margin portion 115 disposed on the sixth surface 6 of the body 110. That is, the margin portions 114 and 115 may be disposed on both end surfaces of the body 110 in the third direction (the width direction).

As shown in FIG. 2, the margin portions 114 and 115 may refer to a region between both ends of the first and second internal electrodes 121 and 122 and a boundary surface of the body 110.

The margin portions 114 and 115 may basically serve to prevent damage to the internal electrodes due to physical or chemical stress.

The margin portions 114 and 115 may be formed as the internal electrodes are formed by applying a conductive paste on a ceramic green sheet excluding a region where the margin portions are to be formed.

In addition, in order to suppress a step difference due to the internal electrodes 121 and 122, the margin portions 114 and 115 may be formed by cutting the internal electrodes to be exposed to the fifth and sixth surfaces 5 and 6 of the body after stacking and subsequently stacking a single dielectric layer or two or more dielectric layers on both side surfaces of the capacitance formation portion Ac in the third direction (the width direction).

Meanwhile, the widths of the margin portions 114 and 115 may not be particularly limited. However, an average width of the margin portions 114 and 115 may be 15 um or less in order to more easily achieve miniaturization and high capacitance of the multilayer electronic component.

The average width of the margin portions 114 and 115 may refer to an average size of the margin portions 114 and 115 in the third direction and may be a value obtained by averaging sizes of the margin portions 114 and 115 measured at five equally spaced points on the side surface of the capacitance formation portion Ac.

The internal electrodes 121 and 122 are alternately arranged with the dielectric layer 111 in the first direction.

The internal electrodes 121 and 122 may include first and second internal electrodes 121 and 122. The first and second internal electrodes 121 and 122 may be alternately disposed to face each other with the dielectric layer 111 constituting the body 110 interposed therebetween and may be respectively connected to the third and fourth surfaces 3 and 4 of the body 110. Specifically, one end of the first internal electrode 121 may be connected to the third surface, and one end of the second internal electrode 122 may be connected to the fourth surface. That is, in an exemplary embodiment, the internal electrodes 121 and 122 may contact the third surface 3 or the fourth surface 4.

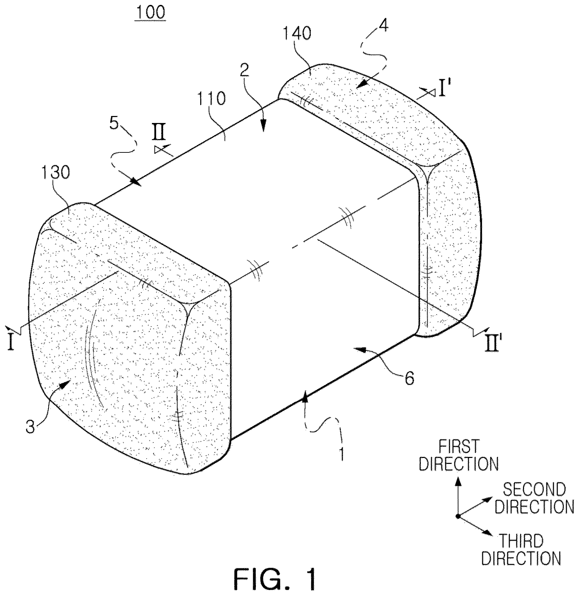

As shown in FIGS. 1 and 2, the first internal electrode 121 may be spaced apart from the fourth surface 4 and may be exposed to the third surface 3, and the second internal electrode 122 may be spaced apart from the third surface 3 and may be exposed to the fourth surface 4. The first external electrode 130 may be disposed on the third surface 3 of the body and connected to the first internal electrode 121, and the second external electrode 140 may be disposed on the fourth surface 4 of the body and connected to the second internal electrode 122.

That is, the first internal electrode 121 is not connected to the second external electrode 140 but connected to the first external electrode 130, and the second internal electrode 122 is not connected to the first external electrode 130 but connected to the second external electrode 140. Accordingly, the first internal electrode 121 may be formed to be spaced apart from the fourth surface 4 by a predetermined distance, and the second internal electrode 122 may be formed to be spaced apart from the third surface 3 by a predetermined distance. In this case, the first and second internal electrodes 121 and 122 may be electrically separated from each other by the dielectric layer 111 disposed therebetween.

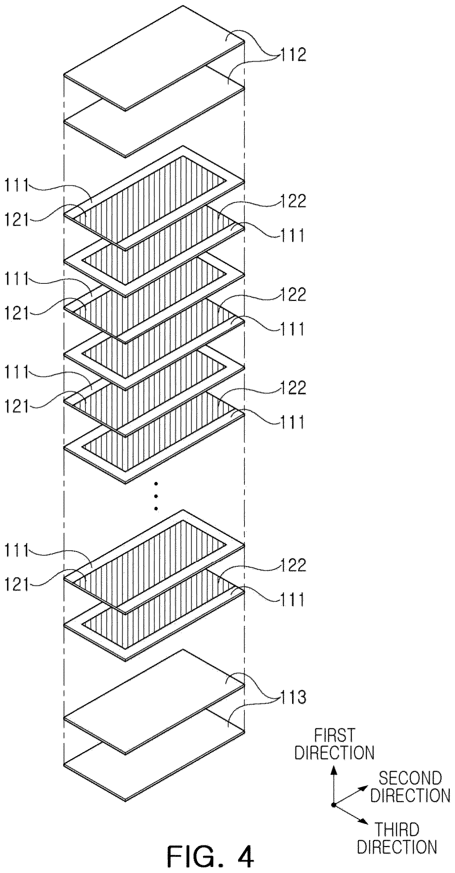

Referring to FIG. 4, the body 110 may be formed by alternately stacking a ceramic green sheet on which the first internal electrode 121 is printed and a ceramic green sheet on which the second internal electrode 122 is printed and subsequently sintering the green sheets.

A material for forming the internal electrodes 121 and 122 is not particularly limited, and a material having excellent electrical conductivity may be used. For example, the internal electrodes 121 and 122 may include at least one of nickel (Ni), copper (Cu), palladium (Pd), silver (Ag), gold (Au), platinum (Pt), tin (Sn), tungsten (W), titanium (Ti), and alloys thereof.

In addition, the internal electrodes 121 and 122 may be formed by printing a conductive paste for internal electrodes including at least one of nickel (Ni), copper (Cu), palladium (Pd), silver (Ag), gold (Au), platinum (Pt), tin (Sn), tungsten (W), titanium (Ti), and alloys thereof on a ceramic green sheet. A printing method of the conductive paste for internal electrodes may be a screen printing method or a gravure printing method, but the present disclosure is not limited thereto.

An average thickness te of the internal electrodes 121 and 122 is not particularly limited and may vary depending on the purpose. In order to miniaturize the multilayer electronic component 100, the average thickness te of the internal electrodes 121 and 122 may be 0.35 um or less, and in order to improve the reliability of the multilayer electronic component 100 under high temperature and high voltage, the average thickness te of the internal electrodes 121 and 122 may be 2 $\mu$m or more.

The average thickness te of the internal electrodes 121 and 122 is obtained as follows. In an image of a cross-section of the body 110 in length and thickness directions (L-T) taken at the center of the body 110 in the width direction scanned with a scanning electron microscope, a total of five internal electrode layers including two upper layers and two lower layers based on one internal electrode layer at a point at which a central line of the body in the length direction and a central line of the body in the thickness direction meet are extracted among the internal electrode layers, five points including two left points and two right points based on one reference point are then determined at equal intervals based on the point at which the central line of the body in the length direction and the central line of the body in the thickness direction meet, and thereafter, thicknesses at the respective points are measured and averaged.

The external electrodes 130 and 140 are disposed on the body 110.

The external electrodes 130 and 140 may include a first external electrode 130 in contact with the third surface 3 of the body 110 and a second external electrode 140 in contact with the fourth surface 4 of the body 110.

Hereinafter, various exemplary embodiments of the structures of the external electrodes 130 and 140 are described based on the first external electrode 130. The description of the first external electrode 130 may also be applied to the second external electrode 140.

The external electrode 130 may include the first electrode layer 131 in contact with the internal electrode 121 and the second electrode layer 132 disposed on the first electrode layer 131.

The first electrode layer 131 includes the Cu 131a and may serve to secure electrical connectivity with the internal electrode 121. Here, the Cu 131a included in the first electrode layer 131 may form an alloy, an intermetallic compound, or a solid solution with a conductive metal included in the internal electrode 121. For example, when the internal electrodes 121 and 122 include Ni, a Ni-Cu intermetallic compound may be formed at an interface between the internal electrode 121 and the first electrode layer 131, and accordingly, electrical connectivity of the external electrode 130 with the internal electrodes 121 and 122 may be improved. Meanwhile, the first electrode layer may be formed by applying a conductive paste including Cu and glass to one or more of the third surface 3 and the fourth surface 4 of the body 110 and sintering the body, but is not limited thereto.

The second electrode layer 132 may be disposed on the first electrode layer 131. The second electrode layer may include a Cu 132a and an SiC 132c. The SiC 132c may improve chemical resistance of the second electrode layer 132 and delay sintering of the Cu 132a to control sintering shrinkage, and thus, the SiC 132c may serve to improve density. Accordingly, when the plating layers 133 and 134 are disposed on the second electrode layer 132, chemical resistance to the plating solution may be improved, and when a conductive resin layer 135 is disposed on the second electrode layer 132, surface roughness of the second electrode layer 132 may be improved, thereby improving adhesion between the second electrode layer 132 and the conductive resin layer 135.

The SiC 132c included in the second electrode layer 132 is a material resistant to thermal shock and has excellent chemical stability. When the SiC 132c is included in the second electrode layer 132, damage to the internal electrode 121 due to thermal shock and plating solution penetration may be prevented, thereby improving the strength, chemical resistance, and moisture resistance reliability of the multilayer electronic component 100.

In particular, as in the exemplary embodiment, when the second electrode layer 132 includes Si and Al and further includes an alkali metal or an alkaline earth metal, a decrease in chemical resistance and moisture resistance reliability may be prevented.

That is, when the second electrode layer 132 includes Si and Al, further includes an alkali metal or alkaline earth metal, and further includes SiC, the effect of improving the chemical resistance and moisture resistance reliability of the multilayer electronic component 100 may become more remarkable.

Meanwhile, since the SiC 132c is a material that is resistant to thermal shock as described above, it may not be deformed even after sintering the external electrode 130. That is, the shape of the introduced SiC and the shape of SiC present in the second electrode layer 132 of the multilayer electronic component 100 may be substantially the same. Meanwhile, SiC may be added in the form of powder having spherical particles to control uniform sintering shrinkage of the second electrode layer 132, and at least some of the particles of the SiC 132c of the second electrode layer 132 according to an exemplary embodiment may be spherical.

Meanwhile, if the proportion of the SiC 132c in the second electrode layer 132 is excessive, sintering of Cu in the second electrode layer may become insufficient due to excessive sintering delay, which may actually deteriorate the moisture resistance reliability of the multilayer electronic component 100. Thus, in an exemplary embodiment, the sinterability of the second electrode layer 132 may be appropriately controlled by adjusting the area fraction of the SiC 132c in the second electrode layer 132 to 20 % or less, and accordingly, deterioration in moisture resistance reliability of the multilayer electronic component 100 may be prevented. Meanwhile, the area fraction of the SiC 132c in the second electrode layer 132 may be 5 % or more to improve adhesion strength to the conductive resin layer 135 or improve moisture resistance reliability by providing sufficient roughness to the surface of the second electrode layer 132.

Meanwhile, the SiC 132c may be substantially included only in the second electrode layer 132 and may not be included in the first electrode layer 131. That is, in an exemplary embodiment, the first electrode layer 131 may include SiC in an area fraction less than 1%. The area fraction of SiC included in the first electrode layer 131 may be measured by a method similar to the method of measuring the area fraction of SiC in the second electrode layer 132 disclosed herein. Other methods and/or tools appreciated by one of ordinary skill in the art, even if not described in the present disclosure, may also be used.

Meanwhile, the first electrode layer 131 may include first glass 131b, and the second electrode layer 132 may include second glass 132b. In an exemplary embodiment, the composition of the first glass 131b included in the first electrode layer 131 and the second glass 132b included in the second electrode layer 132 may be different. Accordingly, the first electrode layer 131 and the second electrode layer 132 may include glass having different characteristics, thereby ensuring more advantageous characteristics of the external electrode 130.

Specifically, the first glass 131b may include Ba and Zn, and the second glass 132b may include Si and Al. Since the first electrode layer 131 includes the first glass 131b including Ba and Zn, which has excellent adhesion to the dielectric layer 111 included in the body 110, penetration of external moisture into the multilayer electronic component 100 may be prevented, and since the second electrode layer 132 includes the second glass 132b including Si and Al, which may suppress sintering shrinkage, densification of the external electrode 130 may be improved, thereby improving chemical resistance of the multilayer electronic component 100 from a plating solution.

The first glass 131b may further include Si and Na in addition to Ba and Zn, and the second glass 132b may further include Sr and Ba in addition to Si and Al. Elements included in the first and second glasses 131b and 132b may be present in the form of oxides and may be present as amorphous glass.

Meanwhile, since the first glass 131b is glass including Ba and Zn, a glass transition temperature Tg of the first glass 131b may be lower than that of the second glass 132b, which is described below. Accordingly, a portion of the first glass 131b may diffuse into the dielectric layer 111 of the body 110 during a pre-sintering process. That is, in an exemplary embodiment, at least a portion of the end E of the dielectric layer 111 in contact with the first electrode layer 131 may include the first glass 131b. Accordingly, the adhesion between the external electrode 130 and the body 110 may be improved.

Meanwhile, the second electrode layer 132 including the second glass 132b may further include one or more of an alkali metal, an alkaline earth metal, and oxides thereof to lower the glass transition temperature Tg. In this case, the glass transition temperature Tg may be lowered by weakening a portion of the network structure of Si-Al, but there is a risk that chemical resistance to plating solutions may deteriorate. Accordingly, in an exemplary embodiment in the present disclosure, since the second electrode layer 132 includes the SiC 132c, the glass transition temperature Tg may be lowered, and at the same time, the deterioration of chemical resistance to the plating solution may be prevented.

In an exemplary embodiment, an average thickness of the second electrode layer 132 may be greater than an average thickness of the first electrode layer 131. By forming the second electrode layer 132, which has excellent moisture resistance and chemical resistance, to be thicker than the first electrode layer 131, the moisture resistance reliability and chemical resistance of the multilayer electronic component 100 are improved without deteriorating the adhesion between the external electrode 130 and the body 110.

Both the first electrode layer 131 and the second electrode layer 132 include Cu as a conductive metal, but they may be distinguished from an image observed through a scanning electron microscope (SEM).

Specifically, in an image from which the external electrode 130 is observed through an SEM after polishing the cross-section of the multilayer electronic component 100 in the length-width (LW) direction to 1/2 in the thickness (T) direction, the contrast may become darker in the order of the Cu 131a and 132a, the first glass 131b, the second glass 132b, and the SiC 132c, based on which the first electrode layer 131 and the second electrode layer 132 may be distinguished from each other. That is, a region including the first glass 131b with the second brightest contrast may be identified as the first electrode layer 131, and a region including the second glass 132b with the third brightest contrast and SiC 132c with the darkest contrast may be identified as the second electrode layer 132. The difference in contrast may become clearer when the first glass 131b includes Ba and Zn and the second glass 132b includes Si and Al. The average thickness of the first electrode layer 131 may be obtained by measuring a thickness at various locations in the first electrode layer 131 using scanning electron microscopy (SEM) and taking an average of the measured thicknesses. Other methods and/or tools appreciated by one of ordinary skill in the art, even if not described in the present disclosure, may also be used. The average thickness of the second electrode layer 132 may be obtained similarly.

As an example of a method of measuring the area fraction of SiC in the second electrode layer 132, in an image in which the cross-section of the multilayer electronic component 100 in the length-width direction (the second direction-third direction) is polished to 1/2 in the thickness direction (the first direction), the second electrode layer 132 region is specified by the method of distinguishing between the first electrode layer 131 and the second electrode layer 132 described above, and then, Si and C elements are mapped through scanning electron microscope-energy dispersive spectroscopy (SEM-EDS) analysis, the area of SiC particles may be measured and a ratio of the area of SiC particles to the area of the second electrode layer 132 may be obtained. This measurement may be performed under the conditions of an acceleration voltage of 15 kV and WD = 15 mm and may be further generalized by trisecting the region of the second electrode layer 132 formed on the internal electrodes 121 and 122 in the width direction (the third direction), measuring the area fraction of SiC in each region, and subsequently obtaining an average value. Other methods and/or tools appreciated by one of ordinary skill in the art, even if not described in the present disclosure, may also be used.

The shape of SiC in the second electrode layer 132 may also be measured similarly to the method of measuring the area fraction of SiC. Other methods and/or tools appreciated by one of ordinary skill in the art, even if not described in the present disclosure, may also be used. The ratio of a major axis and a minor axis of SiC particles may be measured, and when the ratio of the major axis and the minor axis is 0.9 or more and 1.1 or less, the SiC particles may be determined as being spherical.

As an example of a method of measuring an average thickness of the first electrode layer 131 and an average thickness of the second electrode layer 132, in an image in which the cross-section of the multilayer electronic component 100 in the length-width direction (the second direction-third direction) is polished to 1/2 in the thickness direction (the first direction), the second electrode layer 132 region is specified by the method of distinguishing between the first electrode layer 131 and the second electrode layer 132 described above, and then, an average value of the size of the first electrode layer 131 in the second direction and an average value of the size of the second electrode layer 132 in the second direction are measured. In the measurement of the average value of the first electrode layer 131 and the second electrode layer 132 in the second direction may be further generalized by dividing the region of the second electrode layer 132 formed on the internal electrodes 121 and 122 into five or more regions in the width direction (the third direction) and then obtaining an average value of the size in the second direction.

In an exemplary embodiment, the external electrode 130 may further include plating layers 133 and 134 disposed on the second electrode layer 132.

The plating layers 133 and 134 serve to improve mounting characteristics. The type of the plating layers 133 and 134 is not particularly limited, and the plating layers 133 and 134 may include one or more of Ni, Sn, Pd, and alloys thereof and may be formed of multiple layers.

For a specific example of the plating layers 133 and 134, the plating layer may be a Ni plating layer or a Sn plating layer, and may be formed by sequentially forming a Ni plating layer and a Sn plating layer on the second electrode layer 132, or may be formed by sequentially forming a Sn plating layer, a Ni plating layer, and/or an Sn plating layer may be formed sequentially. In addition, the plating layer may include a plurality of Ni plating layers and/or a plurality of Sn plating layers.

Referring to FIG. 2, in an exemplary embodiment, a first plating layer 133 including Ni may be disposed on the second electrode layer 132. Through this, when the multilayer electronic component 100 is mounted on a board, thermal shock due to solder-reflow may be alleviated.

Referring to FIG. 2, in an exemplary embodiment, a second plating layer 134 including Sn may be disposed on the first plating layer 133 including Ni. The second plating layer 134 may include Sn, and when disposed as the outermost layer of the external electrodes 130 and 140, the second plating layer 134 may serve to improve mounting characteristics.

In an exemplary embodiment, the external electrode 130 may further include a conductive resin layer 135 disposed on the second electrode layer 132, and the conductive resin layer 135 may include a conductive metal and resin.

The conductive resin layer 135 may be formed directly on the second electrode layer 132, and in this case, the plating layers 133 and 134 may be formed on the conductive resin layer 135.

The conductive metal may include one or more of Cu, Ni, Ag, Sn, and Cr, and the conductive metal may exist in a dispersed form within the resin of the conductive resin layer 135.

The resin may include a resin with strong heat resistance. For example, the resin may include one or more of phenol resin, urea resin, diallyl phthalate resin, melamine resin, guanamine resin, unsaturated polyester resin, polyurethane resin, epoxy resin, acrylic resin, ethyl cellulose resin, aminoalkyd resin, melamine-urea cocondensation resin, silicon resin, and polysiloxane resin, but is not limited thereto.

The conductive resin layer 135 may serve to protect the multilayer electronic component 100 from stress due to bending that may occur when the multilayer electronic component 100 is mounted on a board and stress due to solder reflow.

Meanwhile, when the second electrode layer 132 includes the Cu 132a, second glass 132b, and SiC 132c, roughness may be provided to the surface of the second electrode layer 132, and accordingly, adhesion between the second electrode layer 132 and the conductive resin layer 135 may be improved.

Meanwhile, even when the conductive resin layer 135 is formed on the second electrode layer 132, the area fraction of the SiC 132c included in the second electrode layer 132 needs to be appropriately adjusted. For example, if the area fraction of the SiC 132c of the second electrode layer 132 is less than 5%, the effect of controlling the sintering shrinkage of the second electrode layer 132 may be insignificant and the surface roughness of the second electrode layer 132 may not be sufficiently provided, and if the proportion of the SiC 132c in the second electrode layer 132 exceeds 20 %, there may be a risk that the second electrode layer 132 may not be sintered. Therefore, in an exemplary embodiment, the area fraction of the SiC 132c of the second electrode layer 132 may be adjusted to be 5% or more and 20% or less to provide appropriate roughness to the surface of the second electrode layer 132, thereby improving adhesion with the conductive resin layer 135 and ensuring appropriate sinterability at the same time.

Hereinafter, an experimental example of evaluating the densification and roughness of the second electrode layer 132, the adhesion strength and solubility of the second electrode layer 132 and the conductive resin layer 135 by varying the area fraction of the SiC 132c in the second electrode layer 132 is described.

Powder for forming dielectric layers was mixed with a dispersant using ethanol and toluene as a solvent, and then mixed with a binder to produce a ceramic sheet. An Ni electrode was printed and laminated on the formed ceramic sheet and pressed and cut to form chips. The chips were calcined in an air atmosphere at 400 °C and then sintered for about 1 hour under conditions of about 1,300 °C or less and a hydrogen ($H_2$) concentration of 2.0% or less. A conductive paste including copper powder and a glass frit for forming a first glass was applied and burn out for 1 to 2 hours at a temperature of 600 to 800 °C, and a conductive paste including copper powder, a glass frit for forming a second glass, and SiC spherical powder particles was applied and secondly burned out for 1 to 2 hours at a temperature of 600 to 800 °C.

The glass frit for forming the first glass has the content of about 3 to 15 wt% and has ingredients including Ba, Zn, Si, Na, etc., and the glass frit for forming the second glass has the content of about 3 to 15 wt% and has ingredients including Si, Al, Sr, Ba, etc. In addition to the aforementioned ingredients, binders and additives were mixed into each conductive paste.

Meanwhile, in an experimental example to be described below, in an image in which the cross-section of the multilayer electronic component 100 in the length-width direction (the second direction-third direction) is polished to 1/2 in the thickness direction (the first direction), the second electrode layer 132 region is specified by the method of distinguishing between the first electrode layer 131 and the second electrode layer 132 described above, and then, Si and C elements are mapped through scanning electron microscope-energy dispersive spectroscopy (SEM-EDS) analysis, the area fracture of the SiC 132c was measured by measuring the area of SiC particles and calculating a ratio of the area of SiC particles to the area of the second electrode layer 132. This measurement was performed under the conditions of an acceleration voltage of 15 kV and WD = 15 mm, and the region of the second electrode layer 132 formed on the internal electrodes 121 and 122 was trisected in the width direction (the third direction), and the area fraction of SiC in each region was measured and then averaged.

(Experimental Example 1)

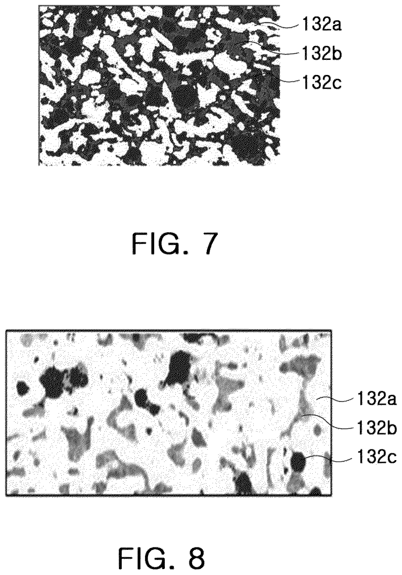

FIG. 7 is an image of a cross-section of the second electrode layer 132 when the SiC area fraction exceeds 20%, captured using a scanning electron microscope (SEM).

Referring to FIG. 7, it can be seen that the proportion of the SiC 132c in the second electrode layer 132 was excessive and the degree of sintering of the Cu 132a was insufficient, resulting in deterioration of wettability of the second glass 132b as well.

FIG. 8 is an image of a cross-section of the second electrode layer when the SiC area fraction satisfies 5% or more and 20% or less, captured using an SEM.

Referring to FIG. 8, the proportion of the SiC 132c in the second electrode layer 132 is appropriate and the degree of sintering of Cu 132a is appropriate, thereby ensuring appropriate densification of the second electrode layer 132.

(Experimental Example 2)

Table 1 illustrates the results of measuring surface roughness of the second electrode layer 132 according to the SiC area fraction.

As for surface roughness, a cross-section of the multilayer electronic component 100 in the length-width direction (the second direction-third direction) was polished to 1/2 in the thickness direction (the first direction), and then measuring the surface (conductivity) of the second electrode layer 132. The roughness of the surface of the second electrode layer 132 (the interface with the conductive resin layer or the plating layer) was measured, and an arithmetic average roughness Ra, a maximum height roughness Rmax, and a 10-point average roughness Rz according to ISO 468 were calculated and listed in Table 1.

[Table 1]

| SiC area fraction | Ra (μm) | Rmax (μm) | Rz (μm) |
|---|---|---|---|
| 0% | 1.2 | 10 | 8 |
| Less than 5% | 1.2 | 10 | 8 |
| 5% or more and 20% or less | 2 | 17 | 12 |
| More than 20% | 4 or greater | 30 or greater | 20 or greater |

Referring to Table 1, it can be seen that, when the SiC area fraction is less than 5%, the effect of improving surface roughness of the second electrode layer 132 is not sufficient. Meanwhile, it can be seen that, when the SiC area fraction exceeds 20%, surface roughness increases excessively and becomes irregular. This is presumed to be caused as sintering of the second electrode layer 132 rarely takes place due to excessive SiC. As a result, it can be confirmed that when the area fraction of SiC 132c in the second electrode layer 132 is 5% or more and 20% or less, the surface roughness of the second electrode layer 132 may be improved and appropriate sinterability may be secured.

(Experimental Example 3)

Table 2 illustrates the results of evaluating adhesion strength after forming the conductive resin layer 135 on the second electrode layer 132. As for the adhesion strength, a paste including copper and epoxy resin was applied to the second electrode layer 132 to form the conductive resin layer 135 and mounted on a substrate, and a maximum strength when the second electrode layer 132 was removed by applying stress to the substrate in a horizontal direction with a tensile strength meter was measured.

[Table 2]

| SiC area fraction | Strength (N/mm$^2$) |
|---|---|
| 0% | 15 |
| Less than 5% | 15 |
| 5% or more and 20% or less | 30 |
| More than 20% | 40 |

Referring to Table 2, it can be seen that the adhesion strength is improved as the area fraction of SiC increases. Combining the results of Table 1 with the results of Table 2, it can be confirmed that, when the area fraction of SiC 132c in the second electrode layer 132 increases, the surface roughness of the second electrode layer 132 increases, and as a result, adhesion strength of the second electrode layer 132 and the conductive resin layer 135 is improved. However, in order to sufficiently improve the surface roughness of the second electrode layer 132 and the adhesion strength between the second electrode layer 132 and the conductive resin layer 135, the area fraction of SiC 132c in the second electrode layer 132 is preferably 5% or more.

(Experimental Example 4)

[Table 3]

| SiC area fraction | Solubility (%) |
|---|---|
| 0% | 14% |
| Less than 5% | 13% |
| 5% or more and 20% or less | 1.00% |
| More than 20% | 0.1% |

Solubility (%) was calculated as $\frac{mass\ before\ immersion - mass\ after\ immersion}{mass\ before\ immersion} \times 100\%$ , and after the second electrode 132 was formed, the second electrode 132 was immersed in distilled water, and the mass before and after immersion was measured.

Referring to Table 3, it can be seen that, as the area fraction of the SiC 132c in the second electrode layer 132 increases, solubility decreases, and thus, moisture resistance reliability is improved. In particular, it can be seen that the effect of reducing solubility is significant when the area fraction of the SiC 132c in the second electrode layer 132 is 5% or more. That is, it can be confirmed that the effect of improving the moisture resistance reliability of the multilayer electronic component 100 is significant when the area fraction of the SiC 132c in the second electrode layer 132 is 5% or more.

One of the various effects of the present disclosure is that, in a two-layer sintered electrode structure having a first electrode layer and second electrode layer structure including Cu, the second electrode layer includes SiC, and the area fraction of SiC in the second electrode layer is adjusted, thereby improving the chemical resistance and moisture resistance reliability of the multilayer electronic component.

One of the various effects of the present disclosure is that, in a two-layer sintered electrode structure having a first electrode layer and second electrode layer structure including Cu, the second electrode layer includes SiC and the composition of glass included in the first electrode layer and the second electrode layer is varied, thereby improving the chemical resistance and moisture resistance reliability of the multilayer electronic component.

While example exemplary embodiments have been shown and described above, it will be apparent to those skilled in the art that modifications and variations could be made without departing from the scope of the present disclosure as defined by the appended claims.

**Claims**

1. A multilayer electronic component comprising:

   a body including a dielectric layer and internal electrodes alternately disposed with the dielectric layer; and
   an external electrode disposed on the body,
   wherein the external electrode includes a first electrode layer in contact with the internal electrodes and a second electrode layer disposed on the first electrode layer,
   the first electrode layer includes Cu, the second electrode layer includes Cu and SiC, and
   an area fraction of SiC in the second electrode layer is 5% or more and 20% or less.

2. The multilayer electronic component of claim 1, wherein the first electrode layer includes SiC in an area fraction less than 1%.

3. The multilayer electronic component of claim 1, wherein the first electrode layer further includes a first glass, the second electrode layer further includes a second glass, and the first glass has a composition different from a composition of the second glass.

4. The multilayer electronic component of claim 1, wherein the first electrode layer further includes a first glass including Ba and Zn, and the second electrode layer further includes a second glass including Si and Al.

5. The multilayer electronic component of claim 4, wherein at least a portion of an end of the dielectric layer in contact with the first electrode layer includes the first glass.

6. The multilayer electronic component of claim 1, wherein at least some of the SiC is spherical.

7. The multilayer electronic component of claim 1, wherein an average thickness of the second electrode layer is greater than an average thickness of the first electrode layer.

8. The multilayer electronic component of claim 1, wherein the external electrode further includes a plating layer disposed on the second electrode layer.

9. The multilayer electronic component of claim 1, wherein the external electrode further includes a conductive resin layer disposed on the second electrode layer and including a conductive metal and a resin.

10. The multilayer electronic component of claim 4, wherein the second electrode later further includes an alkali metal or alkaline earth metal.

FIG. 1

FIRST
DIRECTION

SECOND
DIRECTION

I – I'

FIG. 2

FIRST
DIRECTION

THIRD
DIRECTION

Ⅱ – Ⅱ'

FIG. 3

FIRST
DIRECTION

SECOND
DIRECTION

THIRD
DIRECTION

FIG. 4

FIG. 5

130'

134 133 135     132     131

132a 132b 132c   131a   131b

111

121

E

FIRST
DIRECTION

SECOND
DIRECTION

P'

FIG. 6

132a
132b
132c

FIG. 7

132a
132b
132c

FIG. 8

Europäisches
Patentamt

European
Patent Office

Office européen
des brevets

# EUROPEAN SEARCH REPORT

**Application Number**

EP 24 19 6449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 573 460 B2 (SAMSUNG ELECTRO MECH [KR]) 25 February 2020 (2020-02-25) * columns 3-8; figures 1-5 * | 1-10 | INV. H01G4/232 H01G4/30 |
| A,P | US 11 817 271 B2 (SAMSUNG ELECTRO MECH [KR]) 14 November 2023 (2023-11-14) * columns 4-13; figures 1-8 * | 1-10 | ADD. H01G4/12 |
| A | US 2022/115184 A1 (YUN HYUNG DUK [KR] ET AL) 14 April 2022 (2022-04-14) * paragraphs [0032] - [0051]; figures 1-7 * | 1-10 | |
| A | US 2023/043869 A1 (NAKAMURA TOMOAKI [JP] ET AL) 9 February 2023 (2023-02-09) * paragraphs [0018] - [0046]; figures 1-12 * | 1-10 | |
| A | US 2023/135148 A1 (KANG BYUNG WOO [KR] ET AL) 4 May 2023 (2023-05-04) * paragraphs [0058] - [0071]; figures 1-6 * | 1-10 | TECHNICAL FIELDS SEARCHED (IPC) H01G |

The present search report has been drawn up for all claims

| Place of search | Date of completion of the search | Examiner |
|---|---|---|
| Munich | 21 January 2025 | Rucha, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 19 6449

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2025

| Patent document cited in search report | | Publication date | Patent family member(s) | | | Publication date |
|---|---|---|---|---|---|---|
| US 10573460 | B2 | 25-02-2020 | CN | 110620012 | A | 27-12-2019 |
| | | | KR | 20190142810 | A | 30-12-2019 |
| | | | US | 2019385797 | A1 | 19-12-2019 |
| | | | US | 2020066451 | A1 | 27-02-2020 |
| | | | US | 2021335546 | A1 | 28-10-2021 |
| US 11817271 | B2 | 14-11-2023 | CN | 112447401 | A | 05-03-2021 |
| | | | CN | 116230403 | A | 06-06-2023 |
| | | | JP | 2021034719 | A | 01-03-2021 |
| | | | KR | 20190116162 | A | 14-10-2019 |
| | | | US | 2021065985 | A1 | 04-03-2021 |
| | | | US | 2022301782 | A1 | 22-09-2022 |
| | | | US | 2024038449 | A1 | 01-02-2024 |
| US 2022115184 | A1 | 14-04-2022 | CN | 114300268 | A | 08-04-2022 |
| | | | JP | 2022062671 | A | 20-04-2022 |
| | | | KR | 20220046893 | A | 15-04-2022 |
| | | | US | 2022115184 | A1 | 14-04-2022 |
| US 2023043869 | A1 | 09-02-2023 | JP | 2023018852 | A | 09-02-2023 |
| | | | US | 2023043869 | A1 | 09-02-2023 |
| US 2023135148 | A1 | 04-05-2023 | CN | 116072427 | A | 05-05-2023 |
| | | | JP | 2023070005 | A | 18-05-2023 |
| | | | KR | 20230064236 | A | 10-05-2023 |
| | | | US | 2023135148 | A1 | 04-05-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230118899